# EUROPÄISCHE PATENTSCHRIFT

(11) **EP 2 282 856 B1**
(45) Veröffentlichungstag und Bekanntmachung des Hinweises auf die Patenterteilung: **19.10.2011**
(21) Anmeldenummer: 09749944.6
(22) Anmeldetag: 25.05.2009
(51) Int. Cl.: B21K 1/46, B60R 21/26, F16B 35/06, F42B 3/26

(54) **ZENTRIERBOLZEN FÜR AIRBAG PATRONEN**
CENTERING BOLT FOR AN AIRBAG CARTRIDGE
BOULON DE CENTRAGE POUR DES CARTOUCHES DE COUSSIN GONFLABLE

(30) Priorität: 23.05.2008 DE 102008024986; 06.06.2008 DE 102008027022; 17.11.2008 DE 102008057722
(43) Veröffentlichungstag der Anmeldung: 16.02.2011
(73) Patentinhaber: Kerb-Konus-Vertriebs-GmbH, 92224 Amberg (DE)
(72) Erfinder: NUEBLER, Thomas, 92271 Freihung-Großschön (DE); ZINTL, Andreas, 92260 Ammerthal (DE)
(74) Vertreter: Zech, Stefan Markus
(86) Internationale Anmeldenummer: PCT/EP2009/056319
(87) Internationale Veröffentlichungsnummer: WO 2009/141454

(56) Entgegenhaltungen:
- WO-A-2008/106737
- GB-A- 1 463 273
- JP-A- 2005 153 014

## Beschreibung

Die Erfindung betrifft einen Zentrierbolzen zum Zentrieren der Patrone eines Airbagsystems umfassend einen ggf. mit Außengewinde versehenen Schaft sowie einen Kopf, wobei der Kopf auf seiner dem Schaft abgewandten Seite eine Hauptfläche aufweist und zentral innerhalb dieser Hauptfläche ein Zentrierzapfen angeordnet ist, der über die Hauptfläche des Kopfes vorsteht und mit dem Kopf integral ausgebildet ist, sowie ein Verfahren zum Ausbilden eines Zentrierzapfens bei einem Zentrierbolzen (Siehe z.B. GB-A-1 463 273, auf dem der Oberbegriff des Ansprüche 1 und 11 basiert).

Bei herkömmlichen Zentrierbolzen zum Zentrieren einer Patrone eines Airbagsystems wurde der gegenüber der Hauptfläche des Kopfes vorstehende Zentrierzapfen durch Abdrehen, also durch spanendes Abheben von Material in einem relativ aufwändigen Arbeitsschritt erzeugt. Es versteht sich von selbst, dass diese Vorgehensweise vergleichweise hohe Herstellungskosten für die Zentrierbolzen zum Zentrieren der Patrone eines Airbagsystems nach sich zog.

Die Aufgabe der vorliegenden Erfindung besteht demgegenüber darin, einen Zentrierbolzen zu schaffen, der mit verringerten Kosten herstellbar ist. Gleichzeitig soll ein entsprechendes Verfahren angegeben werden.

Diese Aufgabe wird in vorrichtungstechnischer Hinsicht gelöst mit einem Zentrierbolzen nach Anspruch 1 sowie in verfahrenstechnischer Hinsicht mit einer Herstellungsmethode nach Anspruch 11.

Vorteilhafte Weiterbildungen sind in den Unteransprüchen angegeben.

Nach einem Kerngedanken der vorliegenden Erfindung wird der für den vorliegenden Zentrierbolzen entscheidende Zentrierzapfen nun nicht mehr durch Abdrehen sondern in einem Umformungsprozess durch Materialfluss aus dem Material des Zentrierbolzen erzeugt. Insbesondere wird durch Pressen bzw. Stauchen des Kopfes oder einer Vorform des Kopfes der zentrisch angeordnete Zentrierzapfen durch Rückwärtsfließpressen hergestellt bzw. geformt.

Dass sich ein Zentrierbolzen mit der vorliegenden Technik mit ausreichend definierter Geometrie des Zentrierzapfens herstellen lässt, erschien überraschend. Besonders überraschend und insofern nicht zu erwarten war, dass sich die dem Kopf abgewandte distale Kante des Zentrierzapfens mit den gewünschten kleinen Radien in reproduzierbarer Weise durch die hier vorgeschlagene Umformung zuverlässig realisieren lässt.

Der Zentrierzapfen ist auf der dem Schaft abgewandten Seite des Kopfes von einer ringnutförmigen Vertiefung umgeben.

Obwohl die ringnutförmige Vertiefung auch weitere Merkmale und Vorteile aufweisen kann, ist sie in erster Linie ausgebildet, um den Materialfluss für das erfindungsgemäße Erzeugen des Zentrierzapfens durch Umformung aus dem Material des Zentrierbolzens zu erzeugen. In Versuchen hat sich nämlich gezeigt, dass ein Umformen, insbesondere durch Rückwärtsfließpressen einer Vorform des Kopfes bzw. des Kopfes selbst auch dann möglich ist, wenn der Kopf bis auf den auszubildenden Zentrierzapfen durchgehend plan ausgebildet ist bzw. wird. Allerdings müssen dann größere Schwankungen in den Geometrien der Zentrierzapfen bei Ausbildung einer Serie von Zentrierbolzen hingenommen werden, so dass aus diesem Grunde die Ausbildung des Zentrierzapfens unter gleichzeitiger Ausbildung einer ringnutförmigen Vertiefung um den Zentrierzapfen herum bevorzugt wird.

In einer vorteilhaften Weiterbildung weist der Zentrierzapfen wenigstens an seinem distalen, dem Kopf abgewandten Ende eine im Wesentlichen zylindrische Grundform auf. Dies wird auch von den in den Airbagsystemen derzeit verwendeten Patronen so vorgegeben. Auf der anderen Seite sei erwähnt, dass mit dem hier vorgeschlagenen Verfahren auch abweichende Formen eines Zentrierzapfens herstellbar sind, insbesondere polygonale Ausgestaltungen oder zylindrische bzw. polygonale Ausgestaltung mit einer den Rotationsfreiheitsgrad festlegenden Kodierung.

In einer weiteren, bevorzugten Ausgestaltung weist der Zentrierzapfen wenigstens an seinem distalen, dem Kopf abgewandten Ende eine parallel zur Längsachse des Schaftes ausgerichtete Mantelfläche und eine distale Kopffläche auf, wobei der Übergang zwischen Kopffläche und Mantelfläche scharfkantig, vorzugsweise mit einem Kantenradius unter 0.1 mm, weiter vorzugsweise unter 0.04 mm, und insbesondere mit einem Kantenradius von 0.01 mm ausgebildet ist. Die scharfkantige Ausbildung der oberen Kante zwischen Kopffläche und Mantelfläche wird bei der derzeitigen Ausbildung der Patronen eines Airbagsystems zur zuverlässigen Zentrierung benötigt.

In einer weiter bevorzugten Ausbildung weist die ringnutförmige Vertiefung eine orthogonal zur Längsachse des Schaftes ausgerichtete Basisfläche auf.

In einer alternativ oder zusätzlich sinnvollen Ausgestaltung weist der Zentrierzapfen an seinem proximalen, dem Kopf zugewandten Ende eine zur Längsachse des Schaftes schräg ausgerichtete, vorzugsweise rotationssymmetrische Übergangsfläche auf. Dabei ist die Übergangsfläche speziell so ausgerichtet, dass, wenn gleichzeitig eine ringnutförmige Vertiefung vorgesehen ist, diese sich durch die schräge Ausrichtung der Übergangsfläche zu ihrem Grund bzw. zu ihrer Basis hin verjüngt.

In einer konkreten, bevorzugten Ausgestaltung ist der Zentrierzapfen derart ausgebildet, dass er gegenüber dem Niveau der Anlage- bzw. Hauptfläche um 0.1 mm bis 1.0 mm, insbesondere um etwa 0.1 mm bis 0.7 mm, besonders bevorzugt um etwa 0.25 mm mit einer Toleranz von +/- 0.08 mm vorsteht.

In einer weiteren, bevorzugten Ausgestaltung kann der Schaft des Zentrierbolzens an seinem distalen, dem Kopf abgewandten Ende einen gegenüber dem Rest des Schaftes verjüngten Bund aufweisen. Weiter kann es vorgesehen sein, dass der Kopf an seiner dem Schaft zugewandten Unterseite Eingreifmittel, insbesondere in Form von Zähnen aufweist.

Die Hauptfläche kann mindestens abschnittsweise, insbesondere in einem Abschnitt, welcher sich von der ringförmigen Vertiefung radial nach außen erstreckt, konvex ausgebildet sein. Dies hat zur Folge, dass bei einem - im Vergleich zu einer planen Fläche - ausgeprägteren Schiefstellung des Zentrierbolzens der Zentrierzapfen immer noch mit der Patrone des Airbagsystems in Eingriff list.

Alternativ oder zusätzlich kann die Hauptfläche in dem Abschnitt, welcher sich von der ringförmigen Vertiefung radial nach außen erstreckt, eine ringförmige Erhebung aufweisen. Der Vorteil besteht insbesondere darin, dass sich die ringförmige Erhebung bei einer Schiefstellung des Zentrierbolzens zusätzlich im Material der Patrone verankert.

Weiter wird unabhängig auch ein Verfahren zum Herstellen eines Zentrierzapfens bei einem Zentrierbolzen bzw. zur Herstellung eines Zentrierbolzens beansprucht, wobei der Zentrierbolzen zum Zentrieren der Patrone eines Airbagsystems ausgebildet und bestimmt ist und einen ggf. mit einem Außengewinde versehenen Schaft sowie einen Kopf umfasst, wobei der Kopf auf seiner dem Schaft abgewandten Seite eine Hauptfläche aufweist und zentral innerhalb dieser Hauptfläche ein Zentrierzapfen ausgebildet wird, der über die Hauptfläche des Kopfes vorsteht und mit dem Kopf integral ausgebildet wird, wobei der Zentrierzapfen in einem Umformungsprozess durch Materialfluss erzeugt wird, wobei der Zentrierzapfen von einer ringnutförmigen Vertiefung umgeben ist und wobei die ringnutförmige Vertiefung im Umformprozess bei Erzeugung des Zentrierzapfens augebildet wird. Dies kann in einer speziellen Ausgestaltung dadurch erfolgen, dass der Kopf oder eine Vorform des Kopfes unter Verwendung einer definierten Stempelform bzw. Stempelkontur gepresst bzw. gestaucht wird derart, dass der Zentrierzapfen mit ausreichend definierter Geometrie durch Rückwärtsfließpressen geformt wird.

Wie bereits angedeutet, ist es sowohl möglich, dass der Zentrierzapfen nach Formung der Grundform des Kopfes des Zentrierbolzens erzeugt wird; in gleicher Weise ist es aber auch möglich, dass der Zentrierzapfen gleichzeitig mit der Formung der Grundform des Kopfes des Zentrierzapfens erzeugt wird.

In einer besonders bevorzugten Weiterbildung des hier beanspruchten Verfahrens ist vorgesehen, dass eventuelle Grate des Zentrierzapfens nach seiner Ausbildung nachfolgend geglättet werden und zwar derart, dass zwischen einer distalen Kopffläche und einer sich orthogonal hierzu erstreckenden Mantelfläche gegebene Radien nicht unter 0.01 mm betragen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine Schnittansicht durch eine erste, besonders bevorzugte Ausführungsform eines Zentrierbolzens nach der vorliegenden Erfindung;
- Fig. 2: eine Ansicht vom distalen Ende des Schaftes auf den Zentrierbolzen nach Fig. 1 gemäß der Linie II-II;
- Fig. 3: eine perspektivische Ansicht auf eine Ausführungsform eines Zentrierbol- zens nach der vorliegenden Erfindung;
- Fig. 4: eine Erläuterungsskizze zur Erläuterung einer ersten möglichen Vorgehens- weise zur Herstellung eines Zentrierzapfens nach der vorliegenden Erfin- dung;
- Fig. 5a sowie 5b: Prinzipskizzen zur Erläuterung einer alternativen, weiter bevorzug- ten Vorgehensweise zur Herstellung eines Zentrierzapfens nach der Erfindung;
- Fig. 6: eine Prinzipskizze zur Veranschaulichung eines Stauch- bzw. Presswerkzeu- ges zur Herstellung eines Zentrierzapfens nach der vorliegenden Erfindung;
- Fig. 7a sowie 7b: Prinzipskizzen zur Erläuterung eines bevorzugt angewandten Nach- behandlungsschrittes;
- Fig. 8: Ausschnitt des Zentrierbolzens aus Fig. 1;
- Fig. 9: Ausschnitt einer alternativen Ausführungsform des Zentrierbolzens;
- Fig. 10a: Ausschnitt einer weiteren alternativen Ausführungsform des Zentrierbol- zens; und
- Fig. 10b: der Ausschnitt der weiteren alternativen Ausführungsform des Zentrierbol- zens aus Fig. 10a in einer Ansicht von oben.

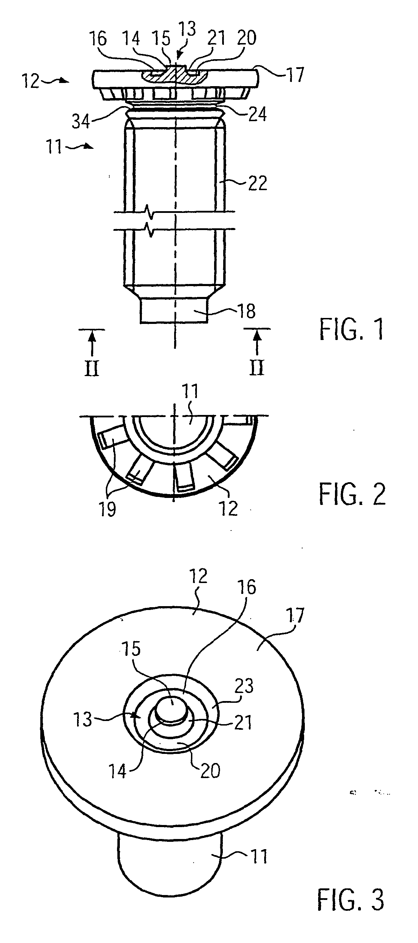

In den Fig. 1 und 2 ist eine erste bevorzugte Ausführungsform eines erfindungsgemäßen Zentrierbolzens dargestellt. Der Zentrierbolzen umfasst einen hier mit einem Außengewindeabschnitt 22 versehenen Schaft 11 sowie einen sich endseitig an den Schaft 11 anschließenden, gegenüber dem Durchmesser des Schaftes erweiterten Kopf 12. Der Schaft 11 kann an seinem dem Kopf 12 abgewandten Ende einen verjüngten Bund 18 aufweisen, was die Einführung des Zentrierbolzens in eine Bohrung mit entsprechendem Innengewinde erleichtert.

An seiner dem Schaft 11 abgewandten Seite weist der Kopf 12 eine bei der vorliegenden Ausführungsform plane Hauptfläche 17 auf, innerhalb der zentral ein im vorliegenden Fall rotationssymmetrischer Zentrierzapfen 13 angeordnet ist. Der Zentrierzapfen 13 steht gegenüber der Hauptfläche 17 in einer zum Schaft 11 entgegengesetzten Richtung nach außen vor, hier konkret um 0.6 mm. Der Zentrierzapfen 13 weist eine orthogonal zur Längsachse des Schaftes 11 ausgerichtete Kopffläche 15 auf, die hier kreisförmig ausgestaltet ist und mit einer Toleranz von +/- 0.1 mm einen Durchmesser von 1.0 mm aufweist.

An die Kopffläche 15 schließt sich eine orthogonal zur Kopffläche ausgerichtete zylindrische Mantelfläche 14 an, die etwa auf Niveau der Hauptfläche 17 in eine schräg ausgerichtete Übergangsfläche 21 übergeht, wobei die Übergangsfläche 21 gleichzeitig Bestandteil einer den Zentrierzapfen 13 umgebenden ringnutförmigen Vertiefung 16 ist. Die ringnutförmige Vertiefung 16 weist einen Nutgrund auf, der hier eine plane Basisfläche 20 ausbildet, wobei die plane Basisfläche 20 parallel zur Hauptfläche 17 des Kopfes 12 ausgerichtet ist. Eine der ersten, als Übergangsfläche 21 ausgebildeten Seitenwand der ringnutförmigen Vertiefung 16 gegenüberliegende zweite Seitenwand 23 kann ebenfalls schräg verlaufend oder zur Basisfläche 20 im Wesentlichen orthogonal ausgerichtet ausgebildet sein.

Obwohl die ringnutförmige Vertiefung 16 weitere Merkmale und Vorteile aufweisen kann, dient sie gleichzeitig dazu, bei der Ausbildung des Zentrierzapfens 13 das für den Materialfluss notwendige Material bereitzustellen. Mit anderen Worten, der Zentrierzapfen 13 wird vorwiegend aus dem bei der Ausbildung der ringnutförmigen Vertiefung 16 verdrängten Material erzeugt.

Der Außengewindeabschnitt 22 am Schaft 11 erstreckt sich bei der hier vorliegenden Ausführungsform nicht komplett bis zum Kopf 12, vielmehr ist ein Begrenzungsbund 34 vorgesehen, welcher eine Nut 24 definiert, die an dem dem Kopf 12 proximalen Ende des Schaftes 11 angeordnet ist. Flächenförmige Materialien, insbesondere Bleche, einer entsprechenden Dicke und mit entsprechenden Aussparungen können in die Nut 24 eingreifen und den Zentrierbolzen halten. Insbesondere ist vorgesehen, dass das Material des Bleches in einem Montageschritt in diese Nut 24 durch Materialfluß eingreift und folglich den Zentrierbolzen fixiert.

An der dem Schaft 11 zugewandten Unterseite weist der Kopf 12 bei der vorliegenden Ausführungsform Eingreifmittel 19 in Gestalt von neun über den Umfang äquidistant verteilt angeordneter Zähne auf, wie insbesondere aus Fig. 2 noch näher ersichtlich.

In Fig. 3 ist eine geringfügig abgewandelte Ausführungsform eines erfindungsgemäßen Zentrierbolzens in perspektivischer Ansicht dargestellt, wobei in die konkrete Ausbildung des Zentrierzapfens 13 weitestgehend der anhand von Fig. 1 vorbeschriebenen Ausbildung entspricht, also der Zentrierzapfen 13 auch hier eine plane, parallel zur Hauptfläche 17 des Kopfes 12 ausgerichtete Kopffläche 15 aufweist, an die sich mit einer relativ scharfen, umlaufenden Kante eine zylindrische Mantelfläche 14 und an diese wiederum eine schräg ausgerichtete Übergangsfläche 21 bis zur Basisfläche 20 einer den Zentrierzapfen 13 umgebenden ringnutförmigen Vertiefung 16 anschließt. Allerdings ist hier die zweite Seitenwand 23 der ringnutförmigen Vertiefung ebenfalls schräg und nicht orthogonal zur Basisfläche ausgerichtet, so dass sich die ringnutförmige Vertiefung von beiden Seiten her in Richtung auf die Basisfläche 20 verjüngt. Der Außenumfang des Kopfes 12 weist eine ganz leicht polygonale Außenkontur auf, was aber im Hinblick auf Aufbau und Funktion des Zentrierzapfens 13 ohne Belang ist.

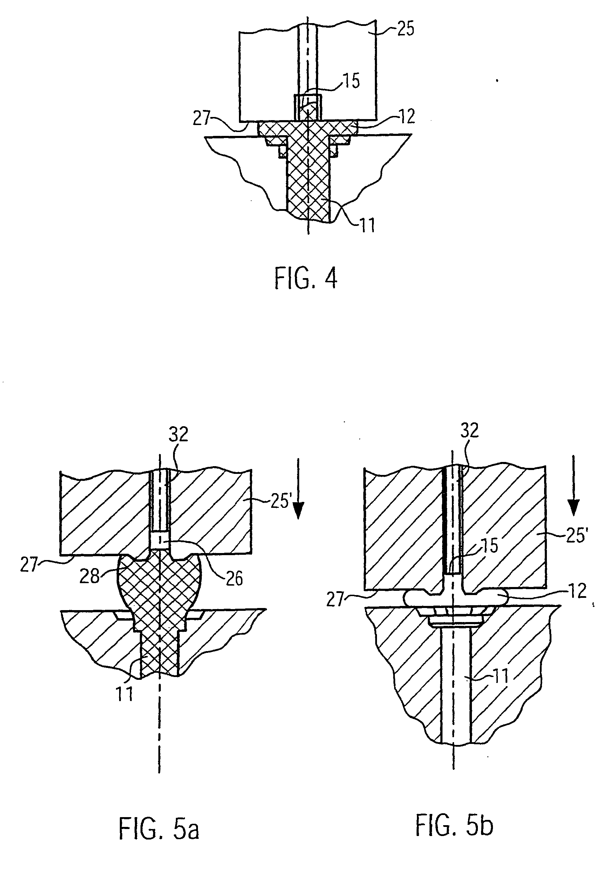

In Fig. 4 ist in einer prinzipskizzenhaften Darstellung eine erste mögliche Vorgehensweise zur Ausbildung des Zentrierzapfens bei dem erfindungsgemäßen Zentrierbolzen veranschaulicht, wobei auch der Zentrierbolzen hier nur in sehr skizzenhafter, rudimentärer Darstellung veranschaulicht ist. Entscheidend ist, dass bei dieser ersten alternativen Vorgehensweise der Zentrierzapfen 13 durch Stauchen bzw. Pressen mittels eines Stempels 25, der eine entsprechende Ausnehmung 26 aufweist, geformt wird. Allerdings weist der Stempel 25 hier eine zur Pressrichtung orthogonal ausgerichtete plane Pressfläche 27 auf, in der zentral die bereits erwähnte Ausnehmung 26 mit einem Durchmesser von etwa 1.0 mm bei dem hier konkret beschriebenen Ausführungsbeispiel angeordnet ist. Zur Erzeugung des über die Hauptfläche 17 des Kopfes 12 vorstehenden Zentrierzapfens 13 ist Materialfluss notwendig, wobei bei der hier konkret beschriebenen Vorgehensweise nach. Fig. 4, nämlich Pressen mit einer durchgehenden, orthogonal zur Pressrichtung ausgerichteten Pressfläche 27 Zentrierzapfen 13 mit relativ stark variierender Höhe entstehen.

Mit der Vorgehensweise, wie sie anhand der Fig. 5a sowie Fig. 5b veranschaulicht ist, lassen sich hingegen Zentrierzapfen mit wesentlich geringerer Variation in den geometrischen Abmessungen erzeugen, da hier der Materialfluss wesentlich günstiger beeinflusst wird.

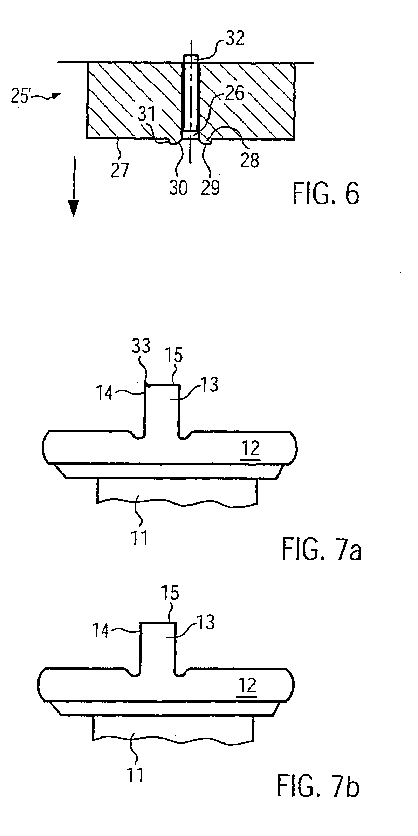

Wie in Fig. 5a gezeigt, umfasst der Stempel 25' des Presswerkzeuges zunächst ebenfalls eine orthogonal zur Pressrichtung ausgerichtete Pressfläche 27 sowie eine zentral angeordnete Ausnehmung 26 mit einem zur Pressrichtung parallelen Axialverlauf. Um die Ausnehmung 26 ist vorliegend allerdings bei dem Presswerkzeug bzw. dem Stempel 25', das ebenfalls unabhängig vom Verfahren bzw. dem Zentrierbolzen beansprucht wird, ein ringförmiger Vorsprung 28 angeordnet, wobei der ringförmige Vorsprung 28 eine zur Pressfläche 27 parallele aber gegenüber der Pressfläche 27 vorstehende Frontfläche 29 sowie eine zur Ausnehmung 26 hin ausgerichtete erste schräge Fläche 30 sowie ausgehend von der Frontfläche an der gegenüberliegenden Seite als Übergang zur Pressfläche 27 eine zweite schräge Fläche 31 aufweist (für einzelne Bezugszeichen vergleiche auch Fig. 6).

In der skizzenhaften Fig. 5a ist der Stauchbeginn unter Verwendung des vorgeschriebenen Werkzeuges und in Fig. 5b das Stauchende dargestellt. Der ringförmige Vorsprung 28 mit Frontfläche 29, erster schrägen Fläche 30 sowie zweiter schrägen Fläche 31 bildet zusammen am Zentrierbolzen die bereits erwähnte ringnutförmige Vertiefung 16 aus, wobei das Material der ringnutförmigen Vertiefung 16 zur Formung des Zentrierzapfens 13 genützt wird. Die erste schräge Fläche 30 des ringförmigen Vorsprungs 28 begünstigt den Materialfluss in die Ausnehmung 26 des Stempels 25' hinein, so dass sich der Zentrierzapfen 13 zuverlässig und mit reproduzierbaren Außengeometrien ausbildet.

Insbesondere ist es von Vorteil, wie aus Fig. 5a ersichtlich, wenn sich der Zentrierzapfen 13 bereits bei Stauchbeginn beginnt zu formen, da mit wachsendem Durchmesser des Kopfes bzw. der Vorform des Kopfes die Umformung schwieriger und weniger reproduzierbarer wird.

Wie aus den Fig. 5a und 5b weiter zu erkennen, wird die Länge des sich ausbildenden Zentrierzapfens 13 vorteilhafterweise durch Begrenzung der zur Verfügung stehenden Tiefe der Ausnehmung 26 kontrolliert. Dies könnte in einer einfachen Ausgestaltung dadurch erfolgen, dass die Ausnehmung 26 eine feste Tiefe aufweist. In der anhand von Fig. 5a und 5b veranschaulichten Ausführungsform ist in die Ausnehmung 26 von ihrem entgegengesetzten Ende ein Bolzen 32 eingesetzt, über den sich die Tiefe der vor Ausbildung des Zentrierzapfens 13 zur Verfügung stehenden Ausnehmung 26 einstellen lässt. In einer weiter bevorzugten Ausgestaltung kann der Bolzen 32 gleichzeitig als Auswerfer dienen, um nach Beendigung des Umforrnprozesses den Zentrierbolzen auszuwerfen.

In Fig. 6 ist der Stempel 25' eines erfindungsgemäßen Presswerkzeuges nochmals separat veranschaulicht. Die Pressrichtung ist mit einem Pfeil angedeutet. Orthogonal zur Pressrichtung weist der Stempel 25' zunächst die bereits erwähnte plan ausgebildete Pressfläche 27 auf. Zentral innerhalb der Pressfläche 27 ist die Ausnehmung 26 angeordnet, in die ein verschieblich gelagerter Bolzen eingeführt ist. Mit Hilfe des Bolzens 32 lässt sich die Tiefe der von der Pressfläche 27 her zugänglichen Ausnehmung 26 einstellen. Konzentrisch um den Rand der Ausnehmung 26 ist der bereits erwähnte ringförmige Vorsprung 28 mit Frontfläche 29, die parallel zur Pressfläche 27 ausgerichtet ist, sowie erster schrägen Fläche 30 und zweiter schrägen Fläche 31 angeordnet. Die erste schräge Fläche 30, die der Ausnehmung 26 zugewandt ist, bewirkt einen erleichterten Materialfluss beim Pressen, insbesondere Rückwärtsfließpressen des Materials des Kopfes bzw. einer Vorform des Kopfes in die Ausnehmung 26 hinein, derart, dass sich ein Zentrierzapfen 13 mit reproduzierbarer Außengeometrie ausbilden lässt.

Die Fig. 7a sowie 7b stellen Prinzipskizzen zur Erläuterung eines bevorzugt angewandten Nachbehandlungsschrittes dar. Wie aus Fig. 7a erkennbar, kann der Zentrierbolzen mit dem im Press- bzw. Stauchverfahren ausgebildeten Zentrierzapfen 13 unmittelbar nach dem Pressen insbesondere an seiner Kopffläche 15 noch Grate 33 aufweisen.

Diese Grate 33 werden im ebenfalls beanspruchten Nachbehandlungsschritt, wie in Fig. 7b ersichtlich, noch entfernt. Dies kann für jeden Zentrierbolzen individuell erfolgen, was die Herstellungskosten erhöht; bevorzugterweise erfolgt der Nachbehandlungsschritt aber so, dass eine Charge von Zentrierbolzen gemeinsam dem Nachbehandlungsschritt zur Entfernung der Grate 33 unterzogen wird.

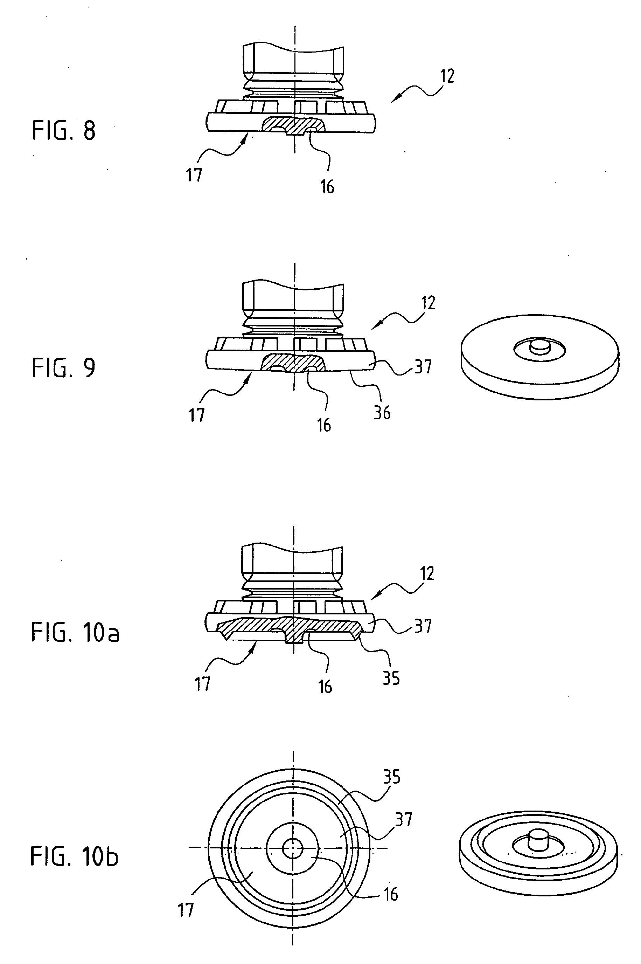

Fig. 8 zeigt einen Ausschnitt des Zentrierbolzens mit dem Kopf 12 aus Fig. 1. Gegenüber Fig. 1 ist der Zentrierbolzen um 180° gedreht. Wie bereits erwähnt, ist die Hauptfläche 17 im Wesentlichen plan ausgebildet.

In Fig. 9 ist ein Ausschnitt einer alternativen Ausführungsform des Zentrierbolzens gezeigt. Im Gegensatz zu der Ausführungsform gemäß Fig. 1 und Fig. 8, weist die Hauptfläche 17 einen ringförmigen, konvexen Abschnitt 36 auf, welcher sich von der ringförmigen Vertiefung radial nach außen erstreckt. Die Konvexität kann vorzugsweise derart bemessen sein, dass eine Dicke eines Kopfscheibenelementes 37 in seinem Randbereich etwa 70 % bis 95 %, insbesondere 85 % bis 90 % seiner Dicke in einem Bereich, der an die ringförmige Vertiefung 16 angrenzt, aufweist. Die durchschnittliche Dicke des Kopfscheibenelementes 37 kann beispielsweise 0,4 mm bis 2 mm, insbesondere 0,6 mm bis 1,3 mm betragen.

Die Figuren 10a und 10b zeigen einen Ausschnitt mit einer alternativen Ausführungsform des Kopfes 12 des Zentrierbolzens. Wie in der teilweisen Schnittansicht nach Fig. 10a zu erkennen ist, weist diese Ausführungsform eine ringförmige Erhebung 35 auf. Fig. 10b kann entnommen werden, dass die ringförmige Erhebung 35 geschlossen ist. Im Querschnitt (siehe Fig. 10a) kann die ringförmige Erhebung als gleichschenkliges Dreieck angenähert werden, wobei die Symmetrieachse des Dreiecks parallel zur Rotationssymmetrieachse des Zentrierbolzens verläuft. Die Höhe des gleichschenkligen Dreiecks bzw. der ringförmigen Erhebung 35 kann vorzugsweise etwa 0,2 mm bis 0,7 mm, insbesondere 0,4 mm bis 0,5 mm betragen. Weiter kann die ringförmige Erhebung 35 vorzugsweise in einem Randbereich des Kopfscheibenelementes 37, insbesondere bei etwa 20 % bis 30 % vom Rand des Kopfscheibenelementes 37 bis zu dessen Zentrum, angeordnet sein. Der Vorteil dieser Ausführungsform besteht insbesondere darin, dass die ringförmige Erhebung 35 eine Bremswirkung auf die Patrone ausübt. Mit anderen Worten verankert sich die ringförmige Erhebung 35 bei einer leichten Schiefstellung des Zentrierbolzens zusätzlich im Material der Patrone.

Die alternativen Ausführungsformen nach den Fig. 9, 10a und 10b können prinzipiell mit dem Verfahren, welches in den Fig. 4 bis 6 erläutert wurde, hergestellt werden. Vorzugsweise kann dabei die Pressfläche 27 des Stempels 25, 25' entsprechend ausgebildet werden. Die Pressfläche 27 kann beispielsweise, bei der Herstellung der Ausführungsform gemäß Fig. 9, zumindest abschnittsweise konkav ausgebildet sein. Bei der Herstellung der Ausführungsform gemäß Fig. 10a und 10b kann die Pressfläche 27 eine zu der ringförmigen Erhebung 35 korrespondierende ringförmige Ausnehmung aufweisen.

### Bezugszeichenliste

- 11: Schaft
- 12: Kopf
- 13: Zentrierzapfen
- 14: Mantelfläche
- 15: Kopffläche
- 16: Ringnutförmige Vertiefung
- 17: Hauptfläche
- 18: Verjüngter Bund
- 19: Eingreifmittel
- 20: Basisfläche (ringnutförmige Vertiefung)
- 21: Übungsfläche (Zentrierzapfen)
- 22: Außengewindeabschnitt
- 23: (zweite) Seitenwand (ringnutförmige Vertiefung)
- 24: Nut
- 25, 25': Stempel
- 26: Ausnehmung
- 27: Pressfläche
- 28: Ringförmiger Vorsprung
- 29: Frontfläche
- 30: Erste schräge Fläche
- 31: Zweite schräge Fläche
- 32: Bolzen
- 33: Grate
- 34: Begrenzungsbund
- 35: Ringförmige Erhebung
- 36: Konvexer Abschnitt
- 37: Kopfscheibenelement

## Patentansprüche

1. Zentrierbolzen zum Zentrieren der Patrone eines Airbagsystems, umfassend einen ggf. mit einem Außengewinde versehenen Schaft (11) sowie einem Kopf (12),
wobei der Kopf (12) auf seiner dem Schaft (11) abgewandten Seite eine Hauptfläche (17) aufweist und zentral innerhalb dieser Hauptfläche (17) ein Zentrierzapfen (13) angeordnet ist, der über die Hauptfläche (17) des Kopfes vorsteht und mit dem Kopf (12) integral ausgebildet ist,
wobei der Zentrierzapfen (13) in einem Umformungsprozess durch Materialfluss erzeugt ist, **dadurch gekennzeichnet, dass**
- der Zentrierzapfen (13) von einer ringnutförmigen Vertiefung (16) umgeben ist und
- die ringnutförmige Vertiefung (16) im Umformungsprozess bei Erzeugung des Zentrierzapfens (13) ausgebildet wurde.

2. Zentrierbolzen nach Anspruch 1,
**dadurch gekennzeichnet, dass**
der Zentrierzapfen (13) wenigstens an seinem distalen, dem Kopf (12) abgewandten Ende eine im Wesentlichen zylindrische Grundform aufweist.

3. Zentrierbolzen nach Anspruch 1 oder 2,
**dadurch gekennzeichnet, dass**
der Zentrierzapfen (13) wenigstens an seinem distalen, dem Kopf (12) abgewandten Ende eine parallel zur Längsachse des Schaftes (11) ausgerichtete Mantelfläche (14) und eine distale Kopffläche (15) aufweist, wobei der Übergang zwischen Kopffläche (15) und Mantelfläche (14) schartkantig, vorzugsweise mit einem Kantenradius unter 0.1 mm, weiter vorzugsweise unter 0.04 mm, und insbesondere mit einem Kantenradius von 0.01 mm ausgebildet ist.

4. Zentrierbolzen nach einem der Ansprüche 1 bis 3,
**dadurch gekennzeichnet, dass**
die ringnutförmigen Vertiefung (16) eine orthogonal zur Längsachse des Schaftes (11) ausgerichtete Basisfläche (20) aufweist.

5. Zentrierbolzen nach einem der Ansprüche 1 bis 4,
**dadurch gekennzeichnet, dass**
der Zentrierzapfen (13) an seinem proximalen, dem Kopf (12) zugewandten Ende eine zur Längsachse des Schaftes (11) schräg ausgerichtete, vorzugsweise rotationssymmetrische, Übergangsfläche (21) umfasst.

6. Zentrierbolzen nach einem der Ansprüche 1 bis 5,
**dadurch gekennzeichnet, dass**
der Zentrierzapfen (13) gegenüber dem Niveau der Anlage- bzw. Hauptfläche (17) um 0.1 mm bis 1.0 mm, insbesondere um etwa 0.1 mm bis 0.7 mm, besonders bevorzugt um etwa 0.25 mm mit einer Toleranz von +/- 0.08 mm vorsteht.

7. Zentrierbolzen nach einem der Ansprüche 1 bis 6,
**dadurch gekennzeichnet, dass**
der Schaft (11) an seinem distalen, dem Kopf abgewandten Ende einen gegenüber dem Rest des Schaftes (11) verjüngten Bund (18) aufweist.

8. Zentrierbolzen nach einem der Ansprüche 1 bis 7,
**dadurch gekennzeichnet, dass**
der Kopf (12) an seiner dem Schaft (11) zugewandten Unterseite Eingreifmittel (19), insbesondere in Form von Zähnen, aufweist.

9. Zentrierbolzen nach einem der Ansprüche 1 bis 8,
**dadurch gekennzeichnet,dass**
die Hauptfläche (17) mindestens abschnittsweise, insbesondere in einem Abschnitt, welcher sich von der ringförmigen Vertiefung (16) radial nach außen erstreckt, konvex ausgebildet ist.

10. Zentrierbolzen nach einem der Ansprüche 1 bis 9,
**dadurch gekennzeichnet, dass**
die Hauptfläche (17) in dem Abschnitt der Hauptfläche (17), welcher sich von der ringförmigen Vertiefung (16) radial nach außen erstreckt, eine ringförmige Erhebung (35) aufweist, in deren Ringinneren sich der Zentrierzapfen (13) befindet.

11. Verfahren zum Ausbilden eines Zentrierzapfens bei einem Zentrierbolzen nach einem der Ansprüche 1 bis 10,
**dadurch gekennzeichnet, dass**
der Zentrierzapfen (13) in einem Umformungsprozess durch Materialfluss erzeugt wird,
wobei der Zentrierzapfen (13) von einer ringnutförmigen Vertiefung (16) umgeben ist und
wobei die ringnutförmige Vertiefung (16) im Umformungsprozess bei Erzeugung des Zentrierzapfens (13) ausgebildet wird.

12. Verfahren nach Anspruch 11,
**dadurch gekennzeichnet, dass**
der Zentrierzapfen (13) nach Formung der Grundform des Kopfes (12) des Zentrierbolzens erzeugt wird.

13. Verfahren nach Anspruch 11,
**dadurch gekennzeichnet, dass**
der Zentrierzapfen (13) gleichzeitig mit der Formung der Grundform des Kopfes (12) des Zentrierbolzens erzeugt wird.

14. Verfahren nach einem der Ansprüche 11 bis 13,
**dadurch gekennzeichnet, dass**
eventuelle Grate des Zentrierzapfens (13) nach seiner Ausbildung nachfolgend geglättet werden derart, dass zwischen einer distalen Kopffläche (15) und einer sich orthogonal hierzu erstreckenden Mantelfläche (14) gegebene Radien nicht unter 0.01 mm betragen.

## Claims

1. A centering bolt for centering the cartridge of an airbag system, comprising a shaft (11) which is optionally provided with an exterior threading, and a head (12), wherein the head (12) comprises a main surface (17) at the side thereof that faces away from the shaft (11), and wherein a centering pin (13) is disposed centrally within said main surface (17), said centering pin protruding above the main surface (17) of the head and being integrally formed with the head (12),
wherein the centering pin (13) is produced through material flow in a deformation process,
**characterized in that**
- the centering pin (13) is surrounded by an annular groove-shaped recess (16), and
- the annular groove-shaped recess (16) has been formed during the deformation process when the centering pin (13) was formed.

2. The centering bolt according to claim 1,
**characterized in that**
the centering pin (13) has an essentially cylindrical base shape at least at its distal end facing away from the head (12).

3. The centering bolt according to claim 1 or 2,
**characterized in that**
the centering pin (13), at least at its distal end facing away from the head (12), has a circumferential surface (14) oriented to be parallel to the longitudinal axis of the shaft (11), and a distal head surface (15), wherein the transition between the head surface (15) and the circumferential surface (14) is formed to be sharp-edged, preferably having an edge radius of less than 0.1 mm, further preferred of less than 0.04mm, and in particular having an edge radius of 0.01 mm.

4. The centering bolt according to any one of claims 1 to 3,
**characterized in that**
the annular groove-shaped recess (16) has a base surface (20) oriented to be orthogonal to the longitudinal axis of the shaft (11).

5. The centering bolt according to any one of claims 1 to 4,
**characterized in that**
the centering pin (13), at its proximal end facing toward the head (12), has a preferably rotationally symmetrical transition surface (21) oriented to be oblique with respect to the longitudinal axis of the shaft (11).

6. The centering bolt according to any one of claims 1 to 5,
**characterized in that**
the centering pin (13) protrudes with respect to the level of the abutment respectively main surface (17) by 0.1 mm to 1.0 mm, in particular about 0.1 mm to 0.7 mm, particularly preferred about 0.25 mm, at a tolerance of +/-0.08 mm.

7. The centering bolt according to any one of claims 1 to 6,
**characterized in that**
the shaft (11), at its distal end facing away from the head, has a collar (18) which is tapered with respect to the remainder of the shaft (11).

8. The centering bolt according to any one of claims 1 to 7,
**characterized in that**
the head (12) has engaging means (19), in particular in the form of teeth, at its lower side facing toward the shaft (11).

9. The centering bolt according to any one of claims 1 to 8,
**characterized in that**
the main surface (17) is formed to be convex at least in sections, in particular in a section which extends radially outward from the annular recess (16).

10. The centering bolt according to any one of claims 1 to 9,
**characterized in that**
the main surface (17), in the section of the main surface (17) which extends radially outward from the annular recess (16), has an annular elevation (35), in the annular interior of which the centering pin (13) is located.

11. A method for forming a centering pin in a centering bolt according to any one of claims 1 to 10,
**characterized in that**
the centering pin (13) is produced through material flow in a deformation process,
wherein the centering pin (13) is surrounded by an annular groove-shaped recess (16), and
wherein the annular groove-shaped recess (16) is formed during the deformation process when the centering pin (13) is being formed.

12. The method according to claim 11,
**characterized in that**
the centering pin (13) is produced after the forming of the base shape of the head (12) of the centering bolt.

13. The method according to claim 11,
**characterized in that**
the centering pin (13) is produced concurrently with the forming of the base shape of the head (12) of the centering bolt.

14. The method according to any one of claims 11 to 13,
**characterized in that**
possible flashes of the centering pin (13) are subsequently smoothed after its forming such that radii resulting between a distal head surface (15) and a circumferential surface (14) extending to be orthogonal to same are not less than 0.01 mm.

## Revendications

1. Boulon de centrage destiné à centrer la cartouche d'un système de coussin autogonflable de sécurité, comprenant un fût (11) éventuellement pourvu d'un filetage extérieur ainsi qu'une tête (12),
la tête (12) présentant une face principale (17) sur son côté situé à l'opposé au fût (11), et un tourillon de centrage (13) qui dépasse de la face principale (17) de la tête et fait corps avec la tête (12) étant disposé en position centrale à l'intérieur de cette face principale (17),
le tourillon de centrage (13) étant produit au cours d'un processus de déformation par flux de matière,
**caractérisé en ce que**
- le tourillon de centrage (13) est entouré par une cavité (16) en forme de rainure annulaire et
- la cavité (16) en forme de rainure annulaire a été constituée au cours du processus de déformation lors de la production du tourillon de centrage (13).

2. Boulon de centrage selon la revendication 1,
**caractérisé en ce que**
le tourillon de centrage (13) présente, au moins à son extrémité distale située à l'opposé à la tête (12), une forme de base sensiblement cylindrique.

3. Boulon de centrage selon la revendication 1 ou 2,
**caractérisé en ce que**
le tourillon de centrage (13) présente, au moins à son extrémité distale située à l'opposé de la tête (12), une face d'enveloppe (14) orientée parallèlement à l'axe longitudinal du fût (11) et une face de tête (15) distale, la jonction entre la face de tête (15) et la face d'enveloppe (14) est constituée en arête vive, de préférence avec un rayon d'arête inférieur à 0,1 mm, plus préférentiellement inférieur à 0,04 mm, et en particulier avec un rayon d'arête de 0,01 mm.

4. Boulon de centrage selon l'une des revendications 1 à 3,
**caractérisé en ce que**
la cavité (16) en forme de rainure annulaire présente une face de base (20) orientée perpendiculairement à l'axe longitudinal du fût (11).

5. Boulon de centrage selon l'une des revendications 1 à 4,
**caractérisé en ce que**
le tourillon de centrage (13) présente, à son extrémité proximale située du côté de la tête (12), une face de jonction (21) orientée obliquement par rapport à l'axe longitudinal du fût (11), de préférence symétrique en rotation.

6. Boulon de centrage selon l'une des revendications 1 à 5,
**caractérisé en ce que**
le tourillon de centrage (13) dépasse de 0,1 mm à 1,0 mm, en particulier d'environ 0,1 mm à 0,7 mm, plus préférentiellement d'environ 0,25 mm avec une tolérance de +/- 0,08 mm, par rapport au niveau de la face de portée /face principale (17).

7. Boulon de centrage selon l'une des revendications 1 à 6,
**caractérisé en ce que**
le fût (11) présente, à son extrémité distale située à l'opposé à la tête, un collet (18) aminci par rapport au reste du fût (11).

8. Boulon de centrage selon l'une des revendications 1 à 7,
**caractérisé en ce que**
la tête (12) présente, sur son dessous situé du côté du fût (11), des moyens de préhension (19), en particulier en forme de dents.

9. Boulon de centrage selon l'une des revendications 1 à 8,
**caractérisé en ce que**
la face principale (17) est constituée de manière convexe, au moins par portions, en particulier dans une portion qui s'étend radialement vers l'extérieur à partir de la cavité (16) de forme annulaire.

10. Boulon de centrage selon l'une des revendications 1 à 9,
**caractérisé en ce que**
la face principale (17) présente, dans la portion de la face principale (17) qui s'étend radialement vers l'extérieur à partir de la cavité (16) de forme annulaire, une élévation (35) de forme annulaire dans l'intérieur annulaire de laquelle se trouve le tourillon de centrage (13).

11. Procédé permettant de constituer un tourillon de centrage dans le cas d'un boulon de centrage selon l'une des revendications 1 à 10,
**caractérisé en ce que**
le tourillon de centrage (13) est produit au cours d'un processus de déformation par flux de matière,
le tourillon de centrage (13) étant entouré par une cavité (16) en forme de rainure annulaire et
la cavité (16) en forme de rainure annulaire est constituée au cours du processus de déformation lors de la production du tourillon de centrage (13).

12. Procédé selon la revendication 11,
**caractérisé en ce que**
le tourillon de centrage (13) est produit après formage de la forme de base de la tête (12) du boulon de centrage.

13. Procédé selon la revendication 11,
**caractérisé en ce que**
le tourillon de centrage (13) est produit en même temps que le formage de la forme de base de la tête (12) du boulon de centrage.

14. Procédé selon l'une des revendications 11 à 13,
**caractérisé en ce que**
des bavures éventuelles du tourillon de centrage (13) sont lissées consécutivement après sa constitution de telle façon que des rayons donnés entre une face de tête (15) distale et une face d'enveloppe (14) s'étendant perpendiculairement à celle-ci ne soient pas inférieurs à 0,
